# EUROPÄISCHE PATENTANMELDUNG

(11) **EP 1 990 145 A1**
(43) Veröffentlichungstag der Anmeldung: **12.11.2008**
(21) Anmeldenummer: 08004846.5
(22) Anmeldetag: 14.03.2008
(51) Int. Cl.: B27B 5/18, B23D 45/06, B23Q 1/26

(54) **Plattenbearbeitungsanlage**

(30) Priorität: 05.05.2007 DE 102007021211
(71) Anmelder: HOLZMA Plattenaufteiltechnik GmbH, 75365 Calw-Holzbronn (DE)
(72) Erfinder: Blaich, Markus, 75365 Claw-Stammheim (DE); Krumrey, Alexander, 71131 Jettingen (DE)
(74) Vertreter: Knapp, Thomas

(57) **Zusammenfassung**

Eine Plattenbearbeitungsanlage umfasst einen Sägewagen (20), der ein Basisteil (24) und mindestens zwei entgegengesetzt ausgerichtete und an dem Basisteil (24) mindestens mittelbar befestigte Laufrollen (30, 32) umfasst. Diese arbeiten jeweils mit einer Laufschiene (34, 36) zusammen. Es wird vorgeschlagen, dass mindestens eine der Laufrollen (32) an dem Basisteil (34) mittels einer Koppeleinrichtung (92) befestigt ist, welche eine elastische Relativbewegung der Laufrolle (32) gegenüber dem Basisteil (24) gestattet.

## Beschreibung

Die Erfindung betrifft eine Plattenbearbeitungsanlage nach dem Oberbegriff des Anspruchs 1.

Vom Markt her ist eine Plattenbearbeitungsanlage in Form einer Plattenaufteilsäge bekannt. Bei dieser werden Stapel plattenförmiger Werkstücke auf einem Zuführtisch einer Sägeeinrichtung zugeführt. Die Sägeeinrichtung umfasst einen quer zur Zuführrichtung verfahrbaren Werkzeugbeziehungsweise Sägewagen, an dem ein Sägeblatt drehbar befestigt ist. Der Sägewagen umfasst mehrere entgegengesetzt ausgerichtete Laufrollen, die an einem Basisteil des Sägewagens befestigt sind. Die Laufrollen sind zwischen einer oberen und einer unteren Laufschiene verspannt.

Aufgabe der vorliegenden Erfindung ist es, eine Plattenaufteilanlage zu schaffen, die noch präziser als bisher arbeitet und besonders einfach gewartet werden kann.

Diese Aufgabe wird durch eine Plattenbearbeitungsanlage mit den Merkmalen des Anspruchs 1 gelöst. Vorteilhafte Weiterbildungen der Erfindung sind in Unteransprüchen angegeben. Weitere erfindungswesentliche Merkmale finden sich in der nachfolgenden Beschreibung und der Zeichnung, wobei die Merkmale sowohl in Alleinstellung als auch in unterschiedlichen Kombinationen für die Erfindung wesentlich sein können, ohne dass hierauf jeweils explizit hingewiesen wird.

Die federnde Halterung mindestens einer der beiden Laufrollen hat den Vorteil, dass ein Verschleiß sowohl an den Laufrollen als auch an den Schienen automatisch ausgeglichen wird, da aufgrund der elastischen Kopplung im Sinne einer Federvorspannung die Laufrollen automatisch nachgespannt werden. Darüber hinaus wird ein besonders gleichmäßiger Rollwiderstand des Laufwagens auf den Schienen realisiert. Auch die Montage des Laufwagens zwischen den beiden Schienen wird vereinfacht, da durch die elastische Kopplung von Anfang an eine wenigstens in etwa definierte Anpresskraft der Laufrollen gegen die Schienen vorliegt. Komplexe und viel Feingefühl erfordernde Einstellarbeiten sind nicht mehr erforderlich.

Eine erste bevorzugte Ausgestaltung der erfindungsgemäßen Plattenbearbeitungsanlage sieht vor, dass die Koppeleinrichtung einen elastischen Koppelabschnitt (Federabschnitt) einer Befestigungsplatte umfasst, an dem die Laufrollen drehbar gelagert sind. Koppelabschnitt und Befestigungsplatte sind also einstückig ausgeführt, wodurch eine sehr robuste Koppeleinrichtung geschaffen wird, die eine vergleichsweise hohe Steifigkeit aufweisen und große Kräfte aufnehmen kann.

In Weiterbildung hierzu wird vorgeschlagen, dass der Koppelabschnitt bereichsweise durch mindestens einen ersten U- oder C-förmigen Schlitz von einem Rest der Befestigungsplatte abgetrennt ist. Damit wird der Koppelabschnitt sozusagen "innerhalb" der Befestigungsplatte realisiert, wodurch diese kompakt baut. Ferner kann die Befestigungsplatte am Werkzeugwagen an Befestigungspunkten befestigt werden, die "rund um" den Koppelabschnitt angeordnet sind, was eine günstige Krafteinleitung mit geringen Biegemomenten gestattet. Denkbar sind grundsätzlich aber auch andere Schlitzgeometrien.

Eine einfache Erhöhung des Federwegs wird erreicht, wenn in der Befestigungsplatte ein zweiter U- oder C-förmiger Schlitz vorhanden ist, der entgegengesetzt zu dem ersten Schlitz ausgerichtet und derart angeordnet ist, dass seine beiden Schenkel zu den Schenkeln des ersten U- oder C-förmigen Schlitzes einen geringen Abstand aufweisen und außerhalb von diesen angeordnet sind.

Für Montage und Betrieb ist es hilfreich, den aktuellen Hub des Koppelabschnittes ("Federweg") gegenüber der Befestigungsplatte zu kennen oder mindestens seine Veränderung abschätzen zu können. Hierfür schlägt die Erfindung ein besonderes einfaches Mittel vor, welches darin besteht, dass ein Zeiger beidseits eines Basisabschnitts des ersten U- oder C-förmigen Schlitzes und/oder des zweiten U- oder C-förmigen Schlitzes befestigt ist. Durch die Relativbewegung der gegenüberliegenden Wände des Basisabschnitts eines U- oder C-förmigen Schlitzes bei einer Auslenkung des Koppelabschnitts gegenüber der unbelasteten Ruhelage wird der Zeiger verdreht. Über die Länge des Zeigers ergibt sich automatisch ein "Verstärkungsfaktor" für die Darstellung des Federwegs beziehungsweise des Hubs.

In konkreter Weiterbildung hierzu wird vorgeschlagen, dass in den gegenüberliegenden Begrenzungswänden des Basisabschnitts jeweils eine Ausnehmung vorhanden ist, in denen der Zeiger gehalten ist. Der Zeiger kann beispielsweise aus einem einfachen Blechteil hergestellt sein, welches in die entsprechenden Ausnehmungen eingesteckt wird.

Eine einfache und preisgünstige, gleichzeitig jedoch äußerst präzise Art und Weise zur Herstellung des U- oder C-förmigen Schlitzes besteht in der Verwendung von Laser- oder Wasserstrahlschneiden.

Eine weitere vorteilhafte Ausgestaltung der erfindungsgemäßen Plattenbearbeitungsanlage besteht darin, dass die Position der Drehachse der Laufrolle gegenüber dem Koppelabschnitt verändert werden kann. Damit kann bei der Montage der Plattenbearbeitungsanlage eine definierte Vorspannung der Laufrollen gegen die entsprechende Schiene hergestellt werden. Aufgrund der erfindungsgemäß vorgesehenen Koppeleinrichtung wird zugleich verhindert, dass die Einstellung zu unzulässig hohen Anpresskräften führt.

In Weiterbildung hierzu wird vorgeschlagen, dass die Drehachse der Laufrolle gegenüber einem Halteabschnitt eine Exzentrizität aufweist. Die Einstellung einer gewünschten Vorspannung bei der Montage der Plattenbearbeitungsanlage wird hierdurch besonders einfach.

Nachfolgend wird eine Ausführungsform der Erfindung unter Bezugnahme auf die beiliegende Zeichnung näher erläutert. In der Zeichnung zeigen:
- Figur 1: eine schematische Darstellung einer Plattenbearbeitungsanlage in Form einer Plattenaufteilsäge mit einem als Sägewagen ausgebildeten Werkzeugwagen;
- Figur 2: eine Ansicht von vorne des Sägewagens von Figur 1;
- Figur 3: eine Draufsicht auf eine Befestigungsplatte für eine Laufrolle des Sägewagens von Figur 2;
- Figur 4: eine perspektivische Darstellung einer Laufrolle des Sägewagens von Figur 2; und
- Figur 5: einen teilweisen Schnitt durch die Laufrolle von Figur 4.

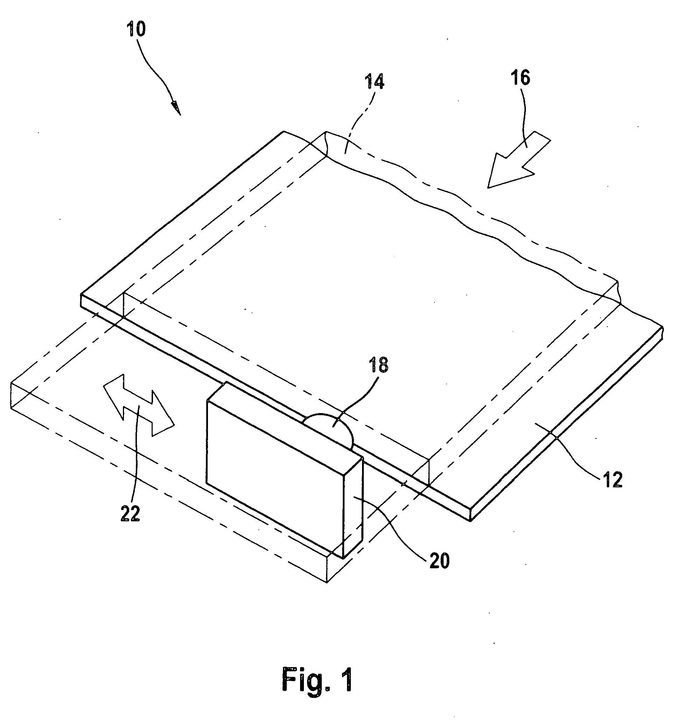

Eine Plattenbearbeitungsanlage trägt in Figur 1 insgesamt das Bezugszeichen 10. Sie umfasst einen Auflagetisch 12, auf dem ein Stapel 14 von plattenförmigen Werkstücken in Vorschubrichtung 16 einem als Sägeblatt ausgebildeten Werkzeug 18 zugeführt werden kann.

Das Sägeblatt 18 ist an einem insoweit als Sägewagen ausgebildeten Werkzeugwagen 20 drehbar befestigt. Der Sägewagen 20 kann in einer Richtung 22 quer zur Vorschubrichtung 16 bewegt werden. Durch diese Bewegung wird der eigentliche Sägeschnitt am Stapel 14 der plattenförmigen Werkstücke ausgeführt.

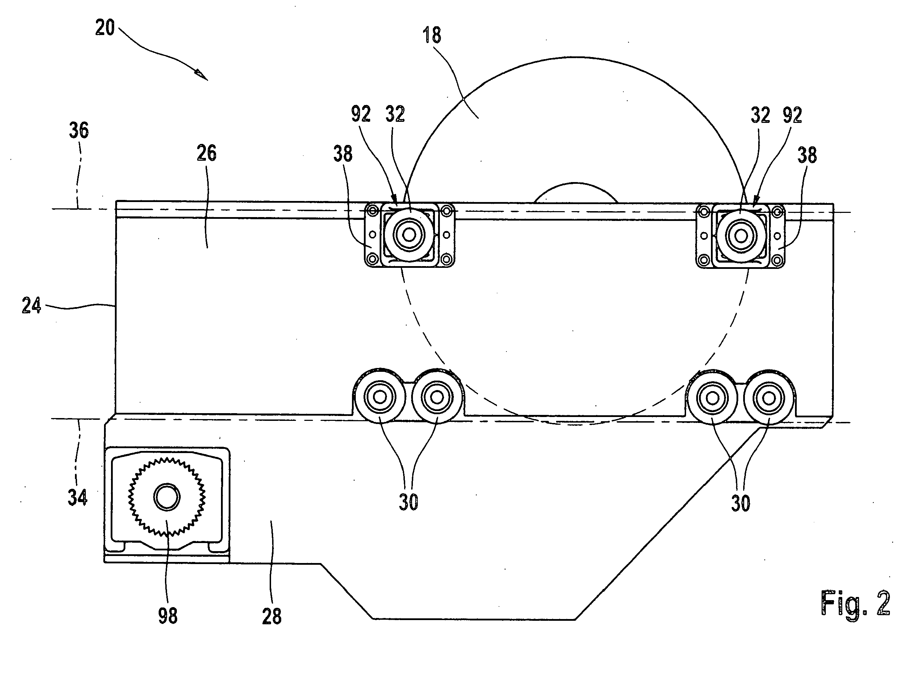

Der grundlegende Aufbau des Sägewagens 20 ist aus Figur 2 ersichtlich: Danach umfasst der Sägewagen 20 ein Basisteil 24, welches insgesamt plattenförmige Gestalt aufweist, aber beispielsweise eine Blechkonstruktion sein kann, um Gewicht zu sparen. Ein in Figur 2 und auch in Einbaulage oberer Führungsbereich 26 des Basisteils 24 weist eine größere Dicke auf als ein Restbereich 28. Am unteren Rand des Führungsbereich 26 sind jeweils zwei Paare von unteren Laufrollen 30 angeordnet, die eine horizontale Drehachse aufweisen. Am oberen Rand des Führungsbereichs 26 sind, horizontal voneinander beabstandet, zwei Laufrollen 32 angeordnet. Die beiden Paare der unteren Laufrollen 30 und die beiden oberen Laufrollen 32 sind dabei jeweils symmetrisch zu einer Ebene angeordnet, in der eine Drehachse (nicht gezeigt) des Sägeblatts 18 liegt. In Einbaulage arbeiten die unteren Laufrollen 30 mit einer unteren Laufschiene 34 zusammen, und die oberen Laufrollen 32 arbeiten mit einer oberen Laufschiene 36 zusammen. Die Laufschienen 34 und 36 sind nur strichpunktiert angedeutet.

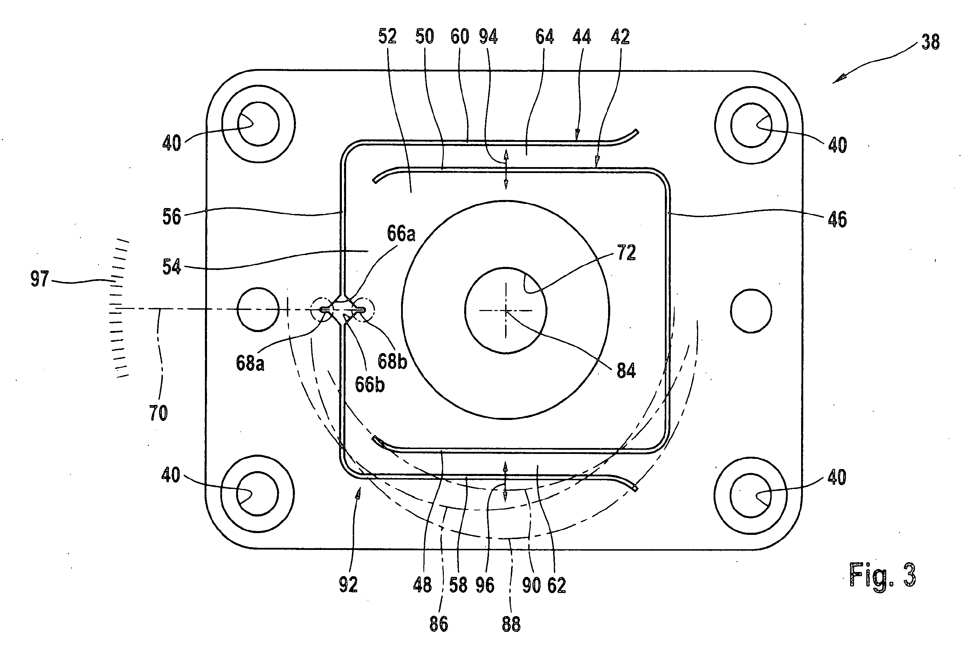

Während die unteren Laufrollen 30 in vertikaler Richtung starr mit dem Basisteil 24 verbunden sind, ist zwischen dem Basisteil 24 und den oberen Laufrollen 32 jeweils eine Koppeleinrichtung angeordnet, die an einer Befestigungsplatte 38 ausgebildet ist, mit der die oberen Laufrollen 32 am Basisteil 24 befestigt sind. Hierauf wird nun unter Bezugnahme auf Figur 3 näher eingegangen:

Die insgesamt rechteckige Grundform aufweisende Befestigungsplatte 38 hat im Bereich ihrer abgerundeten Eckpunkte vier stufenförmige Befestigungslöcher 40, in die Schrauben (nicht dargestellt) eingreifen können, um die Befestigungsplatte 38 am Basisteil 24 zu befestigen. In die Befestigungsplatte 38 sind mittels Wasserstrahlschneiden zwei U- bzw. C-förmige Schlitze 42 und 44 eingebracht. Ein erster, "innerer" U- bzw. C-förmiger Schlitz 42 hat auf der in Figur 3 rechten Seite der Befestigungsplatte 38 einen insgesamt vertikal verlaufenden Basisabschnitt 46 und einen unteren, insgesamt horizontal verlaufenden Schenkel 48 sowie einen oberen, ebenfalls insgesamt horizontal verlaufenden Schenkel 50. Die distalen Enden der Schenkel 48 und 50 sind leicht nach radial einwärts gebogen. Durch den inneren U- bzw. C-förmigen Schlitz 42 wird ein in etwa quadratischer Koppelabschnitt 52 von einem Rest (ohne Bezugszeichen) der Befestigungsplatte 38 insoweit abgetrennt, als er nur noch an seinem in Figur 3 linken Randbereich 54 mit dem Rest der Befestigungsplatte 38 elastisch federnd verbunden ist.

Der zweite, "äußere" U- bzw. C-förmige Schlitz 44 ist entgegengesetzt zu dem ersten U- bzw. C-förmigen Schlitz 42 ausgerichtet. Dies bedeutet, dass ein Basisabschnitt 56, der parallel zum Basisabschnitt 46, also insgesamt vertikal verläuft, auf der in Figur 3 linken Seite der Befestigungsplatte 38 angeordnet ist, links von den distalen Enden der beiden Schenkel 48 und 50 des inneren U-bzw. C-förmigen Schlitzes 42. An den Basisabschnitt 56 schließen sich ein unterer Schenkel 58 und ein oberer Schenkel 60 an, die sich ausgehend von dem Basisabschnitt 56 in Figur 3 insgesamt horizontal nach rechts erstrecken, und deren distale Enden etwas nach radial außen gebogen sind.

Die beiden Schenkel 58 und 60 des zweiten U- bzw. C-förmigen Schlitzes 44 sind, von der Mitte der Befestigungsplatte 38 aus gesehen, außerhalb von den Schenkeln 48 und 50 des ersten U- bzw. C-förmigen Schlitzes 42 angeordnet, von diesen jedoch nur gering beabstandet. Die zwischen den beiden unteren Schenkeln 48 und 58 und den beiden oberen Schenkeln 50 und 60 vorhandenen Materialbereiche sind mit 62 und 64 bezeichnet. Über sie ist der Randbereich 54 des Koppelabschnitts 52 mit dem Rest der Befestigungsplatte 38 verbunden.

Der Basisabschnitt 56 des zweiten U- bzw. C-förmigen Schlitzes 44 weist gegenüber dem Basisabschnitt 46 des ersten U- bzw. C-förmigen Schlitzes 42 eine Besonderheit auf: Ungefähr in der Mitte des Basisabschnitts 56 ist in den einander gegenüberliegenden Begrenzungswänden (ohne Bezugszeichen) des Basisabschnitts 56 eine konische Ausnehmung 66a beziehungsweise 66b vorhanden, was insgesamt bei der in Figur 3 dargestellten Ruhelage eine rautenartige Gesamtausnehmung ergibt. An der "tiefsten" Stelle der jeweiligen konischen Ausnehmung 66a beziehungsweise 66b ist eine sacklochförmige Ausnehmung 68a beziehungsweise 68b vorhanden. In diesen ist ein in Figur 3 nur durch eine strichpunktierte Linie angedeuteter Zeiger 70 befestigt, auf dessen Funktion weiter unten noch genauer eingegangen werden wird.

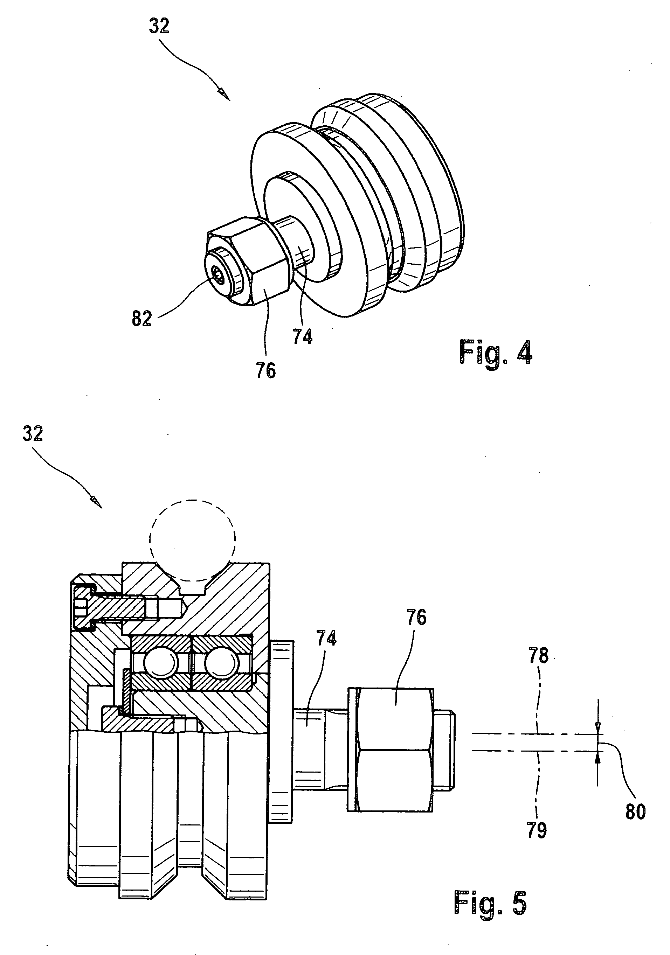

Im Zentrum des Koppelabschnitts 52 ist ein Durchgangsloch 72 vorhanden, durch welches ein Befestigungszapfen 74 einer Laufrolle 32 hindurchgeführt werden kann (vergleiche Figuren 4 und 5). Die Befestigung der Laufrolle 32 am Koppelabschnitt 52 erfolgt mittels einer Mutter 76, die auf ein Gewinde (ohne Bezugszeichen) am Befestigungszapfen 74 aufgeschraubt wird. Befestigungszapfen 74 und Mutter 76 bilden insoweit einen Halteabschnitt der Laufrolle 32. Wie insbesondere aus Figur 5 ersichtlich ist, weist eine Drehachse 78 der Laufrolle 32 gegenüber der Mittelachse 79 des Halteabschnitts 74, 76 eine Exzentrizität 80 auf.

Bei der Montage der Plattenbearbeitungsanlage 10 werden zuerst die beiden Befestigungsplatten 38 am Basisteil 24 des Sägewagens 20 verschraubt. Dann werden die beiden oberen Laufrollen 32 über die Halteabschnitte 74, 76 im Durchgangsloch 72 der beiden Befestigungsplatten 38 montiert, jedoch noch ohne dass die Mutter 76 endgültig angezogen wird. Nun wird der Sägewagen 20 in die Plattenbearbeitungsanlage 10 integriert, indem er mittels der Laufrollen 30 und 32 zwischen den Laufschienen 34 und 36 eingehängt wird.

Wie aus Figur 4 ersichtlich ist, ist im Befestigungszapfen 74 ein Innensechskant 82 ausgebildet, in den nun mit einem entsprechenden Werkzeug (Inbusschlüssel) eingegriffen werden kann. Durch Drehen des Befestigungszapfens 74 kann die Lage der Drehachse 78 der Laufrolle 32 gegenüber einer Mittelachse 84 des Durchgangsloches 72 verändert werden. Eine mittlere vertikale Lage der Laufrolle 32 gegenüber der Mittelachse 84 ist in Figur 3 strichpunktiert dargestellt und mit 86 bezeichnet, eine untere Lage mit 88 und eine obere Lage mit 90.

Durch ein solches Verdrehen des Befestigungszapfens 74 gegenüber der Mittelachse 84 des Durchgangsloches 72 kann die Anpresskraft der Laufrollen 30 und 32 gegen die Laufschienen 34 und 36 eingestellt werden. Im weiteren Betrieb der Plattenbearbeitungsanlage 10 kann hierdurch auch ein Verschleiß sowohl an den Laufrollen 30, 32 als auch an den Laufschienen 34 und 36 im Sinne einer Nachjustierung ausgeglichen werden. Durch den Koppelabschnitt 52 und die beiden U- bzw. C-förmigen Schlitze 42 und 44 wird insgesamt eine Koppeleinrichtung 92 geschaffen, durch die die Laufrolle 32 gegenüber der Befestigungsplatte 38 und somit auch gegenüber dem Basisteil 24 elastisch federnd, vorzugsweise mit einem ganz bestimmten, gewünschten Weg/Kraft-Zusammenhang, gelagert ist. Dabei addieren sich die Federwege 94 und 96 (vergleiche Figur 3), die durch die beiden U- bzw. C-förmigen Schlitze 42 und 44 bereitgestellt werden.

Der Federweg des Randbereichs 54 gegenüber dem Rest der Befestigungsplatte 38 kann leicht durch den Zeiger 70 abgelesen werden, da aufgrund des Hebels des Zeigers 70 eine Relativbewegung der beiden sacklochartigen Ausnehmungen 68a und 68b erheblich verstärkt zur Anzeige an einer Skala 97 gebracht wird. Durch die Koppeleinrichtung 92 wird darüber hinaus die Anpresskraft der Laufrollen 30, 32 gegen die Laufschienen 34, 46 vergleichmäßigt. Die Bewegung 22 des Sägewagens 20 wird im übrigen durch ein am Sägewagen 20 befestigtes Ritzel 98 erzeugt, welches von einem Elektromotor (nicht dargestellt) angetrieben wird und mit einer stationären Zahnschiene (nicht dargestellt) kämmt .

## Patentansprüche

1. Plattenbearbeitungsanlage (10), mit einem Werkzeugwagen, vorzugsweise einem Sägewagen (20), der ein Basisteil (24) und mindestens zwei entgegengesetzt ausgerichtete und an dem Basisteil (24) mindestens mittelbar befestigte Laufrollen (30, 32) umfasst, die jeweils mit einer Laufschiene (34, 36) zusammen arbeiten, **dadurch gekennzeichnet, dass** mindestens eine der Laufrollen (32) an dem Basisteil (34) mittels einer Koppeleinrichtung (92) befestigt ist, welche eine elastische Relativbewegung der Laufrolle (32) gegenüber dem Basisteil (24) gestattet.

2. Plattenbearbeitungsanlage (10) nach Anspruch 1, **dadurch gekennzeichnet, dass** die Koppeleinrichtung (92) einen elastischen Koppelabschnitt (52) einer Befestigungsplatte (38) umfasst, an dem mindestens eine Laufrolle (32) drehbar gelagert ist.

3. Plattenbearbeitungsanlage (10) nach Anspruch 2, **dadurch gekennzeichnet, dass** der Koppelabschnitt (52) bereichsweise durch mindestens einen ersten U- oder C-förmigen Schlitz (42) von einem Rest der Befestigungsplatte (38) abgetrennt ist.

4. Plattenbearbeitungsanlage (10) nach Anspruch 3, **dadurch gekennzeichnet, dass** in der Befestigungsplatte (38) ein zweiter U- bzw. C-förmiger Schlitz (44) vorhanden ist, der entgegengesetzt zu dem ersten U-bzw. C-förmigen Schlitz ausgerichtet und derart angeordnet ist, dass seine beiden Schenkel (58, 60) zu den Schenkeln (48, 50) des ersten U- bzw. C-förmigen Schlitzes (42) einen geringen Abstand aufweisen und außerhalb von diesen angeordnet sind.

5. Plattenbearbeitungsanlage (10) nach einem der Ansprüche 3 oder 4, **dadurch gekennzeichnet, dass** ein Zeiger (70) beidseits eines Basisabschnitts (56) des ersten U- bzw. C-förmigen Schlitzes und/oder des zweiten U-bzw. C-förmigen Schlitzes (44) befestigt ist.

6. Plattenbearbeitungsanlage (10) nach Anspruch 5, **dadurch gekennzeichnet, dass** in den gegenüber liegenden Begrenzungswänden des Basisabschnitts (56) jeweils eine Ausnehmung (66a, 66b) vorhanden ist, in denen der Zeiger (70) gehalten ist.

7. Plattenbearbeitungsanlage (10) nach einem der Ansprüche 3 bis 6, **dadurch gekennzeichnet, dass** der Schlitz (42, 44) oder die Schlitze durch Laser- oder Wasserstrahlschneiden hergestellt sind.

8. Plattenbearbeitungsanlage (10) nach einem der vorhergehenden Ansprüche, **dadurch gekennzeichnet, dass** die Position einer Drehachse (78) der Laufrolle (32) gegenüber dem Koppelabschnitt (52) verändert werden kann.

9. Plattenbearbeitungsanlage (10) nach Anspruch 7, **dadurch gekennzeichnet, dass** die Drehachse (78) der Laufrolle (32) gegenüber einem Haltabschnitt (74, 76) der Laufrolle (32) eine Exzentrizität (80) aufweist.
